(19) Europäisches Patentamt
European Patent Office
Office européen des brevets

(11) Veröffentlichungsnummer : **0 019 171**
**B1**

(12) # EUROPÄISCHE PATENTSCHRIFT

(45) Veröffentlichungstag der Patentschrift : **24.11.82**

(51) Int. Cl.³ : **A 01 N 43/56**

(21) Anmeldenummer : **80102415.9**

(22) Anmeldetag : **05.05.80**

(54) **Herbizide Mittel auf der Basis von N-Azolylmethyl-halogen-acetaniliden und Cyclohexan-1,3-dionderivaten und ihre Verwendung zur Bekämpfung unerwünschten Pflanzenwuchses.**

(30) Priorität : **19.05.79 DE 2920300**

(43) Veröffentlichungstag der Anmeldung : **26.11.80 (Patentblatt 80/24)**

(45) Bekanntmachung des Hinweises auf die Patenterteilung : **24.11.82 Patentblatt 82/47**

(84) Benannte Vertragsstaaten : **AT BE CH DE FR GB IT LI NL SE**

(56) Entgegenhaltungen :
**EP A 0 001 751**
**FR A 2 368 476**
**FR A 2 379 525**
**FR A 2 391 999**

**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Eicken, Karl, Dr.**
**Waldstrasse 63**
**D-6706 Wachenheim (DE)**
Erfinder : **Wuerzer, Bruno, Dr.**
**Ruedigerstrasse 13**
**D-6701 Otterstadt (DE)**

**EP 0 019 171 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Herbizide Mittel auf der Basis von N-Azolylmethyl-halogenacetaniliden und Cyclohexan-1,3-dionderivaten und ihre Verwendung zur Bekämpfung unerwünschten Pflanzenwuchses

Die vorliegende Erfindung betrifft herbizide Mittel, die Mischungen aus N-Azolylmethyl-halogenacetaniliden und Cyclohexan-1,3-dionderivaten enthalten, und Verfahren zur Bekämpfung unerwünschten Pflanzenwuchses mit diesen herbiziden Mitteln.

Die aus der DE-OS 26 48 008 bekannten Halogenacetanilide, die am Stickstoff einen über ein Ringstickstoffatom gebundenen, gegebenenfalls substituierten Azolylmethylrest, wie Pyrazol-1-yl-methyl-, Triazol-1-yl-methyl- oder Tetrazol-1-yl-methylreste, tragen, zeigen bei niederen Aufwandmengen eine ausgezeichnete herbizide Wirkung gegen Gräser. Ferner sind Halogenacetanilide mit Gräserwirkung bekannt, welche als Azolylmethylrest den Imidazol-1-yl-methylrest haben (DE-OS 27 04 281, DE-OS 27 44 396).

Außerdem ist bekannt, daß Cyclohexan-1,3-dionderivate besonders wirksam zur Bekämpfung von grasartigen Pflanzen sind. Bevorzugte Anwendung ist hierbei die Nachauflaufbehandlung (DE-OS 28 22 304).

Es wurde gefunden, daß herbizide Mittel, die eine Mischung aus N-Azolylmethyl-halogenacetaniliden der Formel I

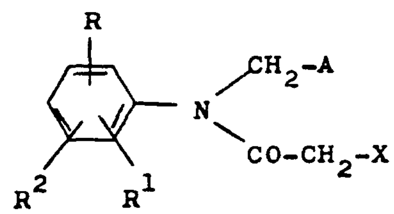

I,

in der

R Wasserstoff, einen unverzweigten oder verzweigten Alkyl- oder Alkoxyrest mit bis zu 5 Kohlenstoffatomen,

$R^1$ und $R^2$ gleich oder verschieden sind und Wasserstoff, Halogen, einen unverzweigten oder verzweigten Alkyl- oder Alkoxyrest mit bis zu 5 Kohlenstoffatomen,

R und $R^2$ zusammen eine orthoständig verknüpfte, gegebenenfalls durch unverzweigte Alkylgruppen mit bis zu 4 Kohlenstoffatomen substituierte Alkylenkette mit bis zu 6 Kohlenstoffatomen,

X Chlor oder Brom und

A einen über ein Ringstickstoffatom gebundenen Pyrrol-, Pyrazol-, Imidazol-, Triazol- oder Tetrazolring, der einfach oder mehrfach durch Halogen, Phenyl, Alkyl-, Alkoxy-, Alkylthio- oder Perfluoralkylreste mit jeweils bis zu 4 Kohlenstoffatomen, Cyan, Carboxy, Carbalkoxy mit bis zu 4 Kohlenstoffatomen in der Alkoxygruppe oder Alkanoylreste mit bis zu 4 Kohlenstoffatomen substituiert sein kann, bedeutet, wobei A auch für Salze der genannten 2 oder 3 Stickstoffatome enthaltenden, gegebenenfalls wie angegeben substituierten Azolringe stehen kann, und substituierten Cyclohexan-1,3-dionderivaten der Formel II

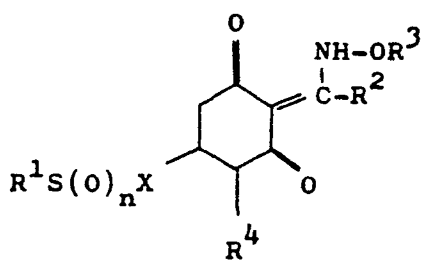

in der

$R^1$ eine Alkylgruppe mit bis zu 4 Kohlenstoffatomen, Phenyl, eine durch Halogen, Alkyl oder Alkoxy mit bis zu 4 Kohlenstoffatomen substituierte Phenyl- oder Benzylgruppe,

$R^2$ eine Alkylgruppe mit bis zu 4 Kohlenstoffatomen,

$R^3$ eine Alkyl- oder Alkenylgruppe mit bis zu 4 Kohlenstoffatomen,

$R^4$ Wasserstoff oder eine Alkoxycarbonylgruppe mit bis zu 5 Kohlenstoffatomen,

X eine unverzweigte oder verzweigte Alkylengruppe mit bis zu 4 Kohlenstoffatomen und

n 0, 1 oder 2 bedeuten, oder Metallsalzen oder Ammoniumsalzen dieser Cyclohexan-1,3-dionderivate enthalten, wobei das Mischungsverhältnis N-Azolylmethyl-halogenacetanilid der Formel I : Cyclohexan-1,3-dionderivat der Formel II 1 : 0,125 bis 1 : 10 Gewichtsteile beträgt,

gegen grasartige Pflanzen intensiver wirksam sind als herbizide Mittel, die lediglich ein N-Azolylmethyl-halogenacetanilid der Formel I oder ein Cyclohexan-1,3-dion-derivat der Formel II enthalten. Überraschenderweise zeigen die N-Azolylmethyl-halogenacetanilide der Formel I und die Cyclohexan-1,3-dionderivate der Formel II in diesen Mischungen eine ausgeprägte synergistische Wirkung, insbesondere bei Aufwandmengen, bei denen eine oder beide Mischungskomponenten nur eine unzureichende Wirkung zeigen.

Als Mischungskomponente der Formel I kommen N-Azolylmethyl-halogenacetanilide in Betracht, bei denen R für Wasserstoff, Alkyl bis zu 5 Kohlenstoffatomen, wie Methyl, Äthyl, n-Propyl, i-Propyl, n-Butyl, sec.-Butyl, i-Butyl, tert.-Butyl, normale und verzweigte Pentylreste, Alkoxy mit bis zu 5 Kohlenstoffatomen, wie Methoxy, Äthoxy, Propoxy, Butoxy, Pentyloxy ;

$R^1$ und $R^2$ gleich oder verschieden sind und für Wasserstoff, Halogen, wie Fluor, Chlor, Brom oder Jod, Alkyl bis zu 5 Kohlenstoffatomen, wie Methyl, Äthyl, n-Propyl, i-Propyl, n-Butyl, sec.-Butyl, i-Butyl, tert.-Butyl, n-Pentyl und verzweigte Pentylreste, Alkoxy mit bis zu 5 Kohlenstoffatomen, wie Methoxy, Äthoxy, Propoxy, Butoxy, Pentyloxy ;

R zusammen mit $R^2$ für eine orthoständig verknüpfte, gegebenenfalls durch Alkyl mit bis zu 4 Kohlenstoffatomen substituierte Alkylenkette mit bis zu 6 Kohlenstoffatomen, wie Äthylen, Trimethylen, Tetramethylen, 1-Methyl-trimethylen, 1,1-Dimethyl-trimethylen, 1,1-Dimethyl-tetramethylen ;

X für Chlor oder Brom, vorzugsweise Chlor und

A für ein über ein Ring-Stickstoffatom gebundenes Pyrrol, Pyrazol, Imidazol, 1,2,4-Triazol, 1,2,3-Triazol, Tetrazol, das einfach oder mehrfach durch Halogen, Phenyl, Alkyl-, Alkoxy-, Alkylthio- oder Perfluoralkylreste mit jeweils bis zu 4 Kohlenstoffatomen, Cyan, Carboxy, Carbalkoxyreste mit bis zu 4 Kohlenstoffatomen in der Alkoxygruppe oder Alkanoyl mit bis zu 4 Kohlenstoffatomen unabhängig voneinander substituiert sein kann, wie 2,6-Dimethylpyrrol, Tetramethylpyrrol, 3(5)-Methylpyrazol, 4-Methylpyrazol, 3(5)-Äthylpyrazol, 4-Äthylpyrazol, 3(5)-Isopropylpyrazol, 4-Isopropylpyrazol, 3,5-Dimethylpyrazol, 3,5-Dimethyl-4-acetylpyrazol, 3,5-Dimethyl-4-propionylpyrazol, 3,4,5-Trimethylpyrazol, 3(5)-Phenylpyrazol, 4-Phenylpyrazol, 3,5-Diphenylpyrazol, 3(5)-Phenyl-5(3)-methylpyrazol, 3(5)-Chlorpyrazol, 4-Chlorpyrazol, 4-Brompyrazol, 4-Jodpyrazol, 3,4,5-Trichlorpyrazol, 3,4,5-Tribrompyrazol, 3,5-Dimethyl-4-chlorpyrazol, 3,5-Dimethyl-4-brompyrazol, 4-Chlor-3(5)-methylpyrazol, 4-Brom-3(5)-methylpyrazol, 4-Methyl-3,5-dichlorpyrazol, 3(5)-Methyl-4,5(3)-dichlorpyrazol, 3(5)-Chlor-5(3)-methylpyrazol, 4-Methoxypyrazol, 3(5)-Methyl-5(3)-methoxypyrazol, 3(5)-Äthoxy-4,5(3)-dimethylpyrazol, 3(5)-Methyl-5(3)-trifluormethylpyrazol, 3,5-Bistrifluormethylpyrazol, 3(5)-Methyl-5(3)-carbäthoxy-pyrazol, 3,5-Biscarbäthoxypyrazol, 3,4,5-Triscarbäthoxypyrazol, 3(5)-Methyl-5(3)-methylthio-4-carbäthoxypyrazol, 4-Methyl-3,5-bis-carbäthoxypyrazol, 4-Cyanopyrazol, 4-Methoxy-3,5-dichlorpyrazol, 4,5-Dichlor-imidazol, 2-Methyl-4,5-dichlor-imidazol, 2-Äthyl-4,5-dichlor-imidazol, 3(5)-Methyl-1,2,4-triazol, 3,5-Dimethyl-1,2,4-triazol, 3(5)-Chlor-1,2,4-triazol, 3(5)-Brom-1,2,4-triazol, 3(5)-Chlor-5(3)-methyl-1,2,4-triazol, 3,5-Dichlor-1,2,4-triazol, 3,5-Dibrom-1,2,4-triazol, 3(5)-Chlor-5(3)-cyano-1,2,4-triazol, 3(5)-Chlor-5(3)-phenyl-1,2,4-triazol, 3(5)-Chlor-5(3)-carbomethoxy-1,2,4-triazol, 3(5)-Methylthio-1,2,4-triazol, 4(5)-Methyl-1,2,3-triazol, 4,5-Dimethyl-1,2,3-triazol, 4(5)-Phenyl-1,2,3-triazol, 4(5)-Chlor-1,2,3-triazol, 1,2,3-Triazol-4(5)-yl-carbonsäureäthylester, 1,2,3-Triazol-4,5-yl-dicarbonsäure-dimethylester, 5-Methyltetrazol, 5-Chlortetrazol, Tetrazolyl-5-carbonsäure-äthylester, steht.

Darüber hinaus kann der Rest A, wenn der gegebenenfalls substituierte Azolring 2 oder 3 Stickstoffatome enthält, auch salzartig an eine der üblichen starken anorganischen oder organischen Säuren, wie Chlorwasserstoffsäure, Bromwasserstoffsäure, Salpetersäure, Schwefelsäure, Tetrafluorborsäure, Fluorsulfonsäure, Ameisensäure, eine halogenierte Carbonsäure, z.B. Trichloressigsäure, eine Alkansulfonsäure, z.B. Methansulfonsäure, eine halogenierte Alkansulfonsäure, z.B. Trifluormethansulfonsäure, Perfluorhexansulfonsäure, eine Arylsulfonsäure, z.B. Dodecylbenzolsulfonsäure, gebunden sein.

Bevorzugt sind Halogenacetanilide, die in 2- und 6-Stellung am Phenylring Methyl oder Äthyl und in 3-Stellung Wasserstoff, Methyl oder Äthyl tragen, wobei als Azole Pyrazol, Triazole oder Tetrazol, die jeweils durch niederes Alkyl, Alkoxy, Carbalkoxy, Cyan oder Halogen substituiert sein können, in Betracht kommen.

Insbesondere enthalten die erfindungsgemäßen herbiziden Mittel folgende N-Azolylmethyl-halogenacetanilide :

2-Chlor-2',6'-dimethyl-N-(pyrazol-1-yl-methyl)-acetanilid, 2-Chlor-2'-methyl-6'-äthyl-N-(pyrazol-1-yl-methyl)-acetanilid, 2-Chlor-2',6'-dimethyl-N-(4-methylpyrazol-1-yl-methyl)-acetanilid, 2-Chlor-2'-methyl-6'-äthyl-N-(4-methoxypyrazol-1-yl-methyl)-acetanilid, 2-Chlor-2'-methyl-6'-äthyl-N-(3(5)-methylpyrazol-1-yl)-acetanilid, 2-Chlor-2',6'-dimethyl-N-(3,5-dimethylpyrazol-1-yl-methyl)-acetanilid, 2-Chlor-2',6'-dimethyl-N-(1,2,4-triazol-1-yl-methyl)-acetanilid, 2-Chlor-2',6'-dimethyl-N-(4-chlorpyrazol-1-yl-methyl)-acetanilid, 2-Chlor-2',3',6'-trimethyl-N-(pyrazol-1-yl-methyl)-acetanilid, 2-Chlor-2'-methyl-6'-äthyl-N-(3,5-dimethyl-pyrazol-1-yl-methyl)-acetanilid, 2-Chlor-2',6'-diäthyl-N-(3,5-dimethyl-pyrazol-1-yl-methyl)-acetanilid, 2-Chlor-2',3',6'-trimethyl-N-(3,5-dimethyl-pyrazol-1-yl-methyl)-acetanilid, 2-Chlor-2',6'-diäthyl-N-(4-methylpyrazol-1-yl-methyl)-acetanilid, 2-Chlor-2'-methyl-6'-äthyl-N-(4-methylpyrazol-1-yl-methyl)-acetanilid, 2-Chlor-2',3',6'-trimethyl-N-(4-methyl-pyrazol-1-yl-methyl)-acetanilid, 2-Chlor-2',6'-dimethyl-N-(3-(5)-methylpyrazol-1-yl-methyl)-acetanilid, 2-Chlor-2',6'-diäthyl-N-(3-(5)-methylpyrazol-1-yl-methyl)-acetanilid, 2-Chlor-2',6'-dimethyl-N-(4-methoxypyrazol-1-yl-methyl)-acetanilid, 2-Chlor-2', 6'-diäthyl-N-(pyrazol-1-yl-methyl)-acetanilid, 2-Chlor-2'-methyl-6'-äthyl-N-(1,2,4-triazol-1-yl-methyl)-acetanilid, 2-Chlor-2',6'-diäthyl-N-(1,2,4-triazol-1-yl-methyl)-acetanilid, 2-Chlor-2', 3', 6'-trimethyl-N-(1,2,4-triazol-1-yl-methyl)-acetanilid, 2-Brom-2',6'-dimethyl-N-(pyrazol-1-yl-methyl)-acetanilid und 2-Brom-2'-methyl-6'-äthyl-N-(pyrazol-1-yl-methyl)-acetanilid.

Als Mischungskomponenten der Formel II kommen beispielsweise Cyclohexan-1,3-dionderivate in Betracht, bei denen $R^1$ für Alkyl mit bis zu 4 Kohlenstoffatomen, wie Methyl, Äthyl, n-Propyl, i-Propyl, n-Butyl, Phenyl, eine durch Halogen, Alkyl oder Alkoxy mit bis zu 4 Kohlenstoffatomen substituierte Phenyl- oder Benzylgruppe, wie 4-Chlorphenyl, 2-Methylphenyl, 3-Methylphenyl, 4-Methylphenyl, 2,5-Dimethylphenyl, 2,4-Dichlorphenyl, 4-Methoxyphenyl ;

$R^2$ für Alkyl mit bis zu 4 Kohlenstoffatomen, wie Methyl, Äthyl, n-Propyl, n-Butyl ;

$R^3$ für Alkyl oder Alkenyl mit bis zu 4 Kohlenstoffatomen, wie Äthyl, Allyl ;

$R^4$ für Wasserstoff oder Alkoxycarbonyl mit bis zu 5 Kohlenstoffatomen, wie Methoxycarbonyl, Äthoxycarbonyl ;

X für eine Alkylengruppe mit bis zu 4 Kohlenstoffatomen, wie Methylen, Äthylen, Methyläthylen, Äthylmethylen und n für 0, 1 oder 2 stehen. Die Verbindungen können auch in Form von Metall- oder Ammoniumsalzen, z.B. als Alkalimetall- oder Erdalkalimetallsalze, wie Natrium-, Kalium-, Calcium- oder Bariumsalze, als Mangan-, Kupfer-, Zink-, Kobalt-, Eisen- oder Silbersalze oder als Tetrabutylammonium-, Trimethylbutylammonium- oder Dimethyl-benzyl-hexadecylammoniumsalze, vorliegen.

Bevorzugte Mischungskomponenten der Formel II sind solche, bei denen $R^1$ eine Alkylgruppe mit 1 bis 3 Kohlenstoffatomen, eine Phenylgruppe oder eine durch Chlor, Methyl oder Methoxy substituierte Phenylgruppe, $R^2$ eine Alkylgruppe mit 2 oder 3 Kohlenstoffatomen, $R^3$ eine Äthyl- oder Allylgruppe, $R^4$ Wasserstoff und X eine gerad- oder verzweigkettige Alkylengruppe mit 1 bis 3 Kohlenstoffatomen bedeuten.

Die Mischungsverhältnisse können einen weiten Bereich gemäß Anspruch 1 umfassen. Die Wahl des Mischungsverhältnisses hängt in erster Linie von dem zu bekämpfenden Unkraut- bzw. Ungrasspektrum, eventuell auch vom Entwicklungsstadium der zu bekämpfenden Pflanzen, ab.

Die zur Bekämpfung unerwünschten Pflanzenwuchses erforderliche Aufwandmenge an reiner Wirkstoffmischung, die in Form der erfindungsgemäßen herbiziden Mitteln ausgebracht wird, ist abhängig von der Bodenart, der Zusammensetzung des Pflanzenbestandes und den klimatischen Verhältnissen des Einsatzortes. Im allgemeinen betragen die Aufwandmengen 0,1 bis 5 kg Wirkstoffmischung/ha.

Als Kulturen, in denen die erfindungsgemäßen herbiziden Mittel angewendet werden können, kommen im wesentlichen diejenigen in Betracht, in denen die Einzelwirkstoffe eingesetzt werden können, beispielsweise Raps und andere Kohlgewächse, Erdnüsse, Baumwolle, Kartoffeln (Irish potatoes), Zuckerrüben, Sojabohnen, etablierte Luzerne, Erdbeeren und zahlreiche andere ein- oder mehrjährige, kräutige oder verholzende Kulturpflanzen.

Bedeutung gewinnt dabei die Ausbringungstechnik. Die erfindungsgemäßen Mittel können in Vor- und Nachauflaufverfahren von Kulturpflanzen und unerwünschten Pflanzen ausgebracht werden. Ferner eignet sich eine spezielle Methode, bei der die Ausbringung so gelenkt wird, daß die Blätter der anwesenden Kulturpflanzen möglichst wenig mit den Mitteln in Berührung kommen, während die dazwischen oder darunter wachsenden unerwünschten Pflanzen oder die freie Bodenfläche getroffen werden Unterblattspritzung, (post-directed, lay-by).

In Anbetracht der Vielseitigkeit der Applikationsmethoden können die erfindungsgemäßen Mittel oder diese enthaltende Mischungen in einer großen Zahl von Kulturen zur Beseitigung unerwünschten Pflanzenwuchses eingesetzt werden.

Im einzelnen seien folgende Nutzpflanzen genannt :

| Botanischer Name | Deutscher Name | Englischer Name |
|---|---|---|
| Allium cepa | Küchenzwiebel | onions |
| Ananas comosus | Ananas | pineapple |
| Arachis hypogaea | Erdnuß | peanuts (groundnuts) |
| Asparagus officinalis | Spargel | asparagus |
| Beta vulgaris spp. altissima | Zuckerrübe | sugarbeets |
| Beta vulgaris spp. rapa | Futterrübe | fodder beets |
| Beta vulgaris spp. esculenta | Rote Rübe | table beets, red beets |
| Brassica napus var. napus | Raps | rape seed |
| Brassica napus var. napobrassica | Kohlrübe | |
| Brassica napus var. rapa | Weiße Rübe | turnips |
| Brassica rapa var. silvestris | Rübsen | |
| Camellia sinensis | Teestrauch | tea plants |
| Carthamus tinctorius | Saflor-Färberdistel | safflower |
| Carya illionoinensis | Pekannußbaum | pecan trees |
| Citrus limon | Zitrone | lemon |

| Botanischer Name | Deutscher Name | Englischer Name |
|---|---|---|
| Citrus maxima | Pampelmuse | grapefruits |
| Citrus reticulata | Mandarine | |
| Citrus sinensis | Apfelsine, Orange | orange trees |
| Coffea arabica (Coffea canephora, Coffea liberica) | Kaffee | coffee plants |
| Cucumis melo | Melone | melons |
| Cucumis sativus | Gurke | cucumber |
| Cynodon dactylon | Bermudagras | Bermudagrass in turfs and lawns |
| Daucus carota | Möhre | carrots |
| Elaeis guineensis | Ölpalme | oil palms |
| Fragaria vesca | Erdbeere | strawberries |
| Glycine max | Sojabohne | soybeans |
| Gossypium hirsutum (Gossypium arboreum Gossypium herbaceum Gossypium vitifolium) | Baumwolle | cotton |
| Helianthus annuus | Sonnenblume | sunflowers |
| Helianthus tuberosus | Topinambur | |
| Hevea brasiliensis | Parakautschukbaum | rubber plants |
| Humulus lupulus | Hopfen | hop |
| Ipomoea batatas | Süßkartoffeln | sweet potato |
| Juglans regia | Walnußbaum | walnut trees |
| Lactua sativa | Kopfsalat | lettuce |
| Lens culinaris | Linse | lentils |
| Linum usitatissimum | Faserlein | flax |
| Lycopersicon lycopersicum | Tomate | tomato |
| Malus spp. | Apfel | apple trees |
| Manihot esculenta | Maniok | cassava |
| Medicago sativa | Luzerne | alfalfa (lucerne) |
| Mentha piperita | Pfefferminze | peppermint |
| Musa spp. | Obst- und Mehlbanane | banana plants |
| Nicotiana tabacum (N. rustica) | Tabak | tobacco |
| Olea europaea | Ölbaum | olive trees |
| Oryza sativa | Reis | rice |
| Panicum miliaceum | Rispenhirse | |
| Phaseolus lunatus | Mondbohne | limabeans |
| Phaseolus mungo | Erdbohne | mungbeans |
| Phaseolus vulgaris | Buschbohnen | snapbeans, green beans, dry beans |
| Petroselinum crispum spp. tuberosum | Wurzelpetersilie | parsley |
| Picea abies | Rotfichte | Norway spruce |
| Abies alba | Weißtanne | fire |
| Pinus spp. | Kiefer | pine trees |
| Pisum sativum | Gartenerbse | English peas |
| Prunus avium | Süßkirsche | cherry trees |
| Prunus domestica | Pflaume | plum trees |
| Prunus dulcis | Mandelbaum | almond trees |
| Prunus persica | Pfirsich | peach trees |
| Pyrus communis | Birne | pear trees |
| Ribes sylcestre | Rote Johhanisbeere | red currants |
| Ribes uva-crispa | Stachelbeere | |
| Ricinus communis | Rizinus | |
| Saccharum officinarum | Zuckerrohr | sugar cane |
| Sesamum indicum | Sesam | Sesame |
| Solanum tuberosum | Kartoffel | Irish potatoes |
| Sorghum bicolor (s. vulgare) | Mohrenhirse | sorghum |
| Sorghum dochna | Zuckerhirse | |
| Spinacia oleracea | Spinat | spinach |
| Theobroma cacao | Kakaobaum | cacao plants |

| Botanischer Name | Deutscher Name | Englischer Name |
|---|---|---|
| Trifolium pratense | Rotklee | red clover |
| Vaccinium corymbosum | Kulturheidelbeere | blueberry |
| Vaccinium vitis-idaea | Preißelbeere | cranberry |
| Vicia faba | Pferdebohnen | tick beans |
| Vigna sinensis (V. unguiculata) | Kuhbohne | cow peas |
| Vitis vinifera | Weinrebe | grapes |
| Zea mays | Mais | Indian corn, sweet corn, maize |

Die erfindungsgemäßen herbiziden Mittel werden beispielsweise in Form von direkt versprühbaren Lösungen, Pulvern, Suspensionen, auch hochprozentige wäßrige, ölige oder sonstige Suspensionen oder Dispersionen, Emulsionen Öldispersionen, Pasten, Stäubemitteln, Streumitteln oder Granulaten durch Versprühen, Vernebeln, Verstäuben, Verstreuen oder Gießen angewendet. Die Anwendungsformen richten sich ganz nach den Verwendungszwecken ; sie sollten in jedem Fall möglichst die feinste Verteilung der erfindungsgemäßen Wirkstoffmischungen gewährleisten.

Zur Herstellung von direkt versprühbaren Lösungen, Emulsionen, Pasten und Öldispersionen kommen Mineralölfraktionen von mittlerem bis hohem Siedepunkt wie Kerosin oder Dieselöl, ferner Kohlenteeröle, sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen in Betracht :

Alkali-, Erdalkali-, Ammoniumsalze von Ligninsulfonsäure, Naphthalinsulfonsäuren, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylen-octylphenoläther, äthoxyliertes Isooctylphenol-, Octylphenol-, Nonylphenol, Alkylphenolpolyglykoläther, Tributylphenylpolyglykoläther, Alkalarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an festen Trägerstoffe hergestellt werden. Feste Trägerstoffe sind Mineralerden wie Silicagel, Kieselsäuren, Kieselgele, Silikate, Talkum, Kaolin, Attaclay, Kalkstein, Kreide, Talkum, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Die Formulierungen enthalten zwischen 0,1 und 95 Gew.% Wirkstoffmischung, vorzugsweise zwischen 0,5 und 90 Gew.%.

Beispiele für Formulierungen sind :

I. 20 Gewichtsteile einer Mischung aus einem Gewichtsteil 2-Chlor-2',6'-dimethyl-N-(pyrazol-1-yl-methyl)-acetanilid und 2 Gewichtsteilen 2-(1-Äthoxyaminobutyliden)-5-(2-äthylthiopropyl)-cyclohexan-1,3-dion werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

II. 20 Gewichtsteile einer Mischung aus einem Gewichtsteil 2-Chlor-2',6'-dimethyl-N-(pyrazol-1-yl-methyl)-acetanilid und 4 Gewichtsteilen 2-(1-Äthoxyaminobutyliden)-5-(2-äthylthiopropyl)-cyclohexan-1,3-dion werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingießen und feines Verteilen der Lösung von 100 000 Gewichtsteilen Wasser erhält man eine wäßrige Dispersion, die 0,02 Gew.% des Wirkstoffs enthält.

III. 3 Gewichtsteile einer Mischung aus einem Gewichtsteil 2-Chlor-2',6'-dimethyl-N-(pyrazol-1-yl-methyl)-acetanilid und einem Gewichtsteil 2-(1-Äthoxyaminobutyliden)-5-(2-äthylthiopropyl)-cyclohexan-1,3-dion werden mit 97 Gewichtsteilen feinteiligem Kaolin innig vermischt. Man erhält auf diese Weise ein Stäubemittel, das 3 Gew.% des Wirkstoffs enthält.

IV. 20 Teile einer Mischung aus 4 Gewichtsteilen 2-Chlor-2',6'-dimethyl-N-(pyrazol-1-yl-methyl)-acetanilid und einem Gewichtsteil 2-(1-Äthoxyaminobutyliden)-5-(2-äthylthiopropyl)-cyclohexan-1,3-dion werden mit 2 Teilen Calciumsalz der Dodecylbenzolsulfonsäure, 8 Teilen Fettalkohol-polyglykoläther, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

V. 30 Gewichtsteile einer Mischung aus einem Gewichtsteil 2-Chlor-2',6'-dimethyl-N-(pyrazol-1-yl-methyl)-acetanilid und 4 Gewichtsteilen 2-(1-Äthoxyaminobutyliden)-5-(2-äthylthiopropyl)-cyclohexan-1,3-dion werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Die erfindungsgemäßen herbiziden Mittel können zusätzlich mit zahlreichen Vertretern weiterer herbizider oder wachstumsregulierender Wirkstoffgruppen gemischt und gemeinsam ausgebracht werden. Beispielsweise kommen als Mischungskomponenten Diazine, Benzothiadiazinone, 2,6-Dinitroaniline, N-Phenyl-carbamate, Thiolcarbamate, Halogencarbonsäuren, Triazine, Amide, Harnstoffe, Diphenyläther, Triazinone, Uracile, Benzofuranderivate und andere in Betracht. Solche Kombinationen dienen zur Verbreiterung des Wirkungsspektrums. Eine Reihe von Wirkstoffen, welche zusammen mit den neuen herbiziden Mitteln für verschiedenste Anwendungsbereiche sinnvolle Mischungen ergeben, werden beispielhaft aufgeführt :

5-Amino-4-chlor-2-phenyl-3(2H)-pyridazinon
5-Amino-4-brom-2-phenyl-3(2H)-pyridazinon
5-Amino-4-chlor-2-cyclohexyl-3(2H)-pyridazinon
5-Amino-4-brom-2-cyclohexyl-3(2H)-pyridazinon

5-Methylamino-4-chlor-2-(3-trifluormethylphenyl)-3(2H)-pyridazinon
5-Methylamino-4-chlor-2-(3-,α,α,β,β-tetrafluoräthoxyphenyl-3(2H)-pyridazinon
5-Dimethylamino-4-chlor-2-phenyl-3(2H)-pyridazinon
4,5-Dimethoxy-2-phenyl-3(2H)-pyridazinon
4,5-Dimethoxy-2-cyclohexyl-3(2H)-pyridazinon
4,5-Dimethoxy-2-(3-trifluormethylphenyl)-3(2H)-pyridazinon
5-Methoxy-4-chlor-2-(3-trifluormethylphenyl)-3(2H)-pyridazinon
5-Amino-4-brom-2(3-methylphenyl)-3(2H)-pyridazinon

3-(1-Methyläthyl)-1H-2,1,3-benzothiadiazin-4(3H)-on-2,2-dioxid und Salze
3-(1-Methyläthyl)-8-chlor-1H-2,1,3-benzothiadiazin-4(3H)-on-2,2-dioxid und Salze
3-(1-Methyläthyl)-8-fluor-1H-2,1,3-benzothiadiazin-4(3H)-on-2,2-dioxid und Salze
3-(1-Methyläthyl)-8-methyl-1H-2,1,3-benzothiadiazin-4(3H)-on-2,2-dioxid und Salze

1-Methoxymethyl-3-(1-methyläthyl)-2,1,3-benzothiadiazin-4(3H)-on-2,2-dioxid
1-Methoxymethyl-8-chlor-3-(1-methyläthyl)-2,1,3-benzothiadiazin-4(3H)-on-2,2-dioxid
1-Methoxymethyl-8-fluor-3-(1-methyläthyl)-2,1,3-benzothiadiazin-4(3H)-on-2,2-dioxid
1-Cyan-8-chlor-3-(1-methyläthyl)-2,1,3-benzothiadiazin-4(3H)-on-2,2-dioxid
1-Cyan-8-fluor-3-(1-methyläthyl)-2,1,3-benzothiadiazin-4(3H)-on-2,2-dioxid
1-Cyan-8-methyl-3-(1-methyläthyl)-2,1,3-benzothiadiazin-4(3H)-on-2,2-dioxid
1-Cyan-3-(1-methyläthyl)-2,1,3-benzothiadiazin-4(3H)-on-2,2-dioxid
1-Azidomethyl-3-(1-methyläthyl)-2,1,3-benzothiadiazin-4(3H)-on-2,2-dioxid
3-(1-Methyläthyl)-1H-pyridino-[3,2-e] 2,1,3-thiadiazin-(4)-on-2,2-dioxid

N-(1-Äthylpropyl)-2,6-dinitro-3,4-dimethylanilin
N-(1-Methyläthyl)-N-äthyl-2,6-dinitro-4-trifluormethylanilin

N-n-Propyl-N-β-chloräthyl-2,6-dinitro-4-trifluormethylanilin
N-n-Propyl-N-cyclopropylmethyl-2,6-dinitro-4-trifluormethyl-anilin
N-Bis-(n-propyl)-2,6-dinitro-3-amino-4-trifluormethylanilin
N-Bis-(n-propyl)-2,6-dinitro-4-methyl-anilin
N-Bis-(n-propyl)-2,6-dinitro-4-methylsulfonyl-anilin
N-Bis-(n-propyl)-2,6-dinitro-4-aminosulfonyl-anilin
Bis-(β-chloräthyl)-2,6-dinitro-4-methyl-anilin
N-Äthyl-N-(2-methylallyl)-2,6-dinitro-4-trifluormethylanilin
N-Methylcarbaminsäure-3,4-dichlorbenzylester
N-Methylcarbaminsäure-2,6-di-tert. butyl)-4-methylphenylester
N-Phenylcarbaminsäure-isopropylester
N-3-Fluorphenylcarbaminsäure-3-methoxypropyl-2-ester
N-3-Chlorphenylcarbaminsäure-isopropylester
N-3-Chlorphenylcarbaminsäure-butin-1-yl-3-ester
N-3-Chlorphenylcarbaminsäure-4-chlor-butin-2-yl-1-ester
N-3,4-Dichlorphenylcarbaminsäure-methylester
N-(4-Amino-benzolsulfonyl)-carbaminsäure-methylester
O-(N-Phenylcarbamoyl)-propanonoxim
N-Äthyl-2-(phenylcarbamoyl)-oxypropionsäureamid
3'-N-Isopropyl-carbamoyloxy-propionanilid

Äthyl-N-(3-(N'-phenylcarbamoyloxy)-phenyl)-carbamat
Methyl-N-(3-(N'-methyl-N'-phenylcarbamoyloxy)-phenyl)-carbamat
Isopropyl-N-(3-(N'-äthyl-N'-phenylcarbamoyloxy)-phenyl)-carbamat
Methyl-N-(3-(N'-3-methylphenylcarbamoyloxy)-phenyl)-carbamat
Methyl-N-(3-(N'-4-fluorphenylcarbamoyloxy)-phenyl)-carbamat
Methyl-N-(3-(N'-3-chlor-4-fluorphenylcarbamoyloxy)-phenyl)-carbamat

Äthyl-N-[3-N'-(3-chlor-4-fluorphenylcarbamoyloxy)-phenyl]-carbamat
Äthyl-N-[3-N'-(3,4-difluorphenylcarbamoyloxy)-phenyl]-carbamat
Methyl-N-[3-(N'-3,4-difluorphenylcarbamoyloxy)-phenyl]-carbamat

N-3-(4'-Fluorphenoxycarbonylamino)-phenylcarbaminsäuremethylester
N-3-(2'-Methylphenoxycarbonylamino)-phenylcarbaminsäureäthylester
N-3-(4'-Fluorphenoxycarbonylamino)-phenylthiolcarbaminsäure-methylester
N-3-(2',4',5'-Trimethylphenoxycarbonylamino)-phenylthiolcarbaminsäure-methylester
N-3-(Phenoxycarbonylamino)-phenylthiolcarbaminsäure-methylester

N,N-Diäthyl-thiolcarbaminsäure-p-chlorbenzylester
N,N-Di n-propyl-thiolcarbaminsäure-äthylester
N,N-Di n-propyl-thiolcarbaminsäure-n-propylester
N,N-Di-isopropyl-thiolcarbaminsäure-2,3-dichlorallylester
N,N-Di-isopropyl-thiolcarbaminsäure-2,3,3-trichlorallylester
N,N-Di-isopropyl-thiolcarbaminsäure-3-methyl-5-isoxazolylmethylester
N,N-Di-isopropyl-thiolcarbaminsäure-3-äthyl-5-isoxazolylmethylester
N,N-Di-sec.-butyl-thiolcarbaminsäure-äthylester
N,N-Di-sec.-butyl-thiolcarbaminsäure-benzylester
N-Äthyl-N-cyclohexyl-thiolcarbaminsäure-äthylester
N-Äthyl-N-bicyclo [2.1.1]-heptyl-thiolcarbaminsäure-äthylester
S-(2,3,3-Trichlorallyl)-(2,2,4-trimethyl-azetidin)-1-carbothiolat
S-Äthyl-hexahydro-1-H-azepin-1-carbothiolat
S-Benzyl-(3-methylhexahydro-1-H-azepin-1)-carbothiolat
S-Benzyl-(2,3-dimethylhexahydro-1-H-azepin-1)-carbothiolat
S-Äthyl-(3-methylhexahydro-1-H-azepin-1)-carbothiolat
N-Äthyl-N-n-butyl-thiolcarbaminsäure-n-propylester
N,N-Dimethyl-dithiocarbaminsäure-2-chlorallylester
N-Methyl-dithiocarbaminsäure-Natriumsalz
Trichloressigsäure-Natriumsalz
α,α-Dichlorpropionsäure-Natriumsalz
α,α-Dichlorbuttersäure-Natriumsalz
α,α-β,β-Tetrafluorpropionsäure-Natriumsalz
α-Methyl,α,β-dichlorpropionsäure-Natriumsalz
α-Chlor-β-(4-chlorphenyl)-propionsäure-methylester
α,β-Dichlor-β-phenylpropionsäure-methylester
Benzamido-oxy-essigsäure

2,3,5-Trijodbenzoesäure (Salze, Ester, Amide)
2,3,6-Trichlorbenzoesäure (Salze, Ester, Amide)
2,3,5,6-Tetrachlorbenzoesäure (Salze, Ester, Amide)
2-Methoxy-3,6-dichlorbenzoesäure (Salze, Ester, Amide)
2-Methoxy-3,5,6-trichlorbenzoesäure (Salze, Ester, Amide)
3-Amino-2,5,6-trichlorbenzoesäure (Salze, Ester, Amide)
O,S-Dimethyl-tetrachlor-thioterephthalat
Dimethyl-2,3,5,6-tetrachlor-terephthalat
Dinatrium-3,6-endoxohexahydro-phthalat
4-Amino-3,5,6-trichlor-picolinsäure (Salze)
2-Cyan-3-(N-methyl-N-phenyl)-amino-acrylsäureäthylester
2-[4-(4'-Chlorphenoxy)-phenoxy]-propionsäureisobutylester
2-[4-(2',4'-Dichlorphenoxy)-phenoxy]-propionsäuremethylester
2-[4-(4'-Trifluormethylphenoxy)-phenoxy]-propionsäuremethylester
2-[4-(2'-Chlor-4'-trifluorphenoxy)-phenoxy]-propionsäure-Natriumsalz
2-[4-(3',5'-Dichlorpyridyl-2-oxy)-phenoxy]-propionsäure-Natriumsalz
2-(N-Benzoyl-3,4-dichlorphenylamino)-propionsäureäthylester
2-(N-Benzoyl-3-chlor-4-fluorphenylamino)-propionsäure-methylester
2-(N-Benzoyl-3-chlor-4-fluorphenylamino)-propionsäure-isopropylester

2-Chlor-4-äthylamino-6-isopropylamino-1,3,5-triazin
2-Chlor-4-äthylamino-6-(amino-2'-propionitril)-1,3,5-triazin
2-Chlor-4-äthylamino-6-(2-methoxypropyl)-2-amino-1,3,5-triazin
2-Chlor-4-äthylamino-6-butin-1-yl-2-amino-1,3,5-triazin
2-Chlor-4,6-bisäthylamino-1,3,5-triazin
2-Chlor-4,6-bisisopropylamino-1,3,5-triazin
2-Chlor-4-isopropylamino-6-cyclopropylamino-1,3,5-triazin

2-Azido-4-methylamino-6-isopropylamino-1,3,5-triazin
2-Methylthio-4-äthylamino-6-isopropylamino-1,3,5-triazin
2-Methylthio-4-äthylamino-6-tert. butylamino-1,3,5-triazin
2-Methylthio-4,6-bisäthylamino-1,3,5-triazin
2-Methylthio-4,6-bisisopropylamino-1,3,5-triazin

2-Methoxy-4-äthylamino-6-isopropylamino-1,3,5-triazin
2-Methoxy-4,6-bisäthylamino-1,3,5-triazin
2-Methoxy-4,6-bisisopropylamino-1,3,5-triazin
4-Amino-6-tert. butyl-3-methylthio-4,5-dihydro-1,2,4-triazin-5-on
4-Amino-6-phenyl-3-methyl-4,5-dihydro-1,2,4-triazin-5-on
4-Isobutylidenamino-6-tert. butyl-3-methylthio-4,5-dihydro-1,2,4-triazin-5-on
1-Methyl-3-cyclohexyl-6-dimethylamino-1,3,5-triazin-2,4-dion

3-tert. Butyl-5-chlor-6-methyluracil
3-tert. Butyl-5-brom-6-methyluracil
3-Isopropyl-5-brom-6-methyluracil
3-sec. Butyl-5-brom-6-methyluracil
3-(2-Tetrahydropyranyl)-5-chlor-6-methyluracil
3-(2-Tetrahydropyranyl)-5,6-trimethylenuracil
3-Cyclohexyl-5,6-trimethylenuracil

2-Methyl-4-(3'-trifluormethylphenyl)-tetrahydro-1,2,4-oxadiazin-3,5-dion
2-Methyl-4-(4'-fluorphenyl)-tetrahydro-1,2,4-oxadiazin-3,5-dion
3-Amino-1,2,4-triazol
1-Allyloxy-1-(4-bromphenyl)-2-[1', 2', 4'-triazolyl-(1')]-äthan (Salze)
1-(4-Chlorphenoxy)-3,3-dimethyl-1-(1H-1,2,3-triazol-1-yl)-butan-2-on
N,N-Diallylchloracetamid
N-Isopropyl-2-chloracetanilid
N-(Butin-1-yl-3)-2-chloracetanilid

2-Methyl-6-äthyl-N-propargyl-2-chloracetanilid
2-Methyl-6-äthyl-N-äthoxymethyl-2-chloracetanilid
2-Methyl-6-äthyl-N-(2-methoxy-1-methyläthyl)-2-chloracetanilid
2-Methyl-6-äthyl-N-(isopropoxycarbonyläthyl)-2-chloracetanilid
2-Methyl-6-äthyl-N-(4-methoxypyrazol-1-yl-methyl)-2-chloracetanilid
2-Methyl-6-äthyl-N-(pyrazol-1-yl-methyl)-2-chloracetanilid

2,6-Dimethyl-N-(pyrazon-1-yl-methyl)-2-chloracetanilid
2,6-Dimethyl-N-(4-methylpyrazol-1-yl-methyl)-2-chloracetatanilid
2,6-Dimethyl-N-(1,2,4-triazol-1-yl-methyl)-2-chloracetanilid
2,6-Dimethyl-N-(3,5-dimethylpyrazol-1-yl-methyl)-2-chlor-acetanilid
2,6-Dimethyl-N-(1,3-dioxolan-2-yl-methyl)-2-chloracetanilid
2,6-Dimethyl-N-(2-methoxyäthyl)-2-chloracetanilid
2,6-Dimethyl-N-isobutoxymethyl-2-chloracetanilid
2,6-Diäthyl-N-methoxymethyl-2-chloracetanilid
2,6-Diäthyl-N-n-butoxymethyl-2-chloracetanilid
2,6-Diäthyl-N-äthoxycarbonylmethyl-2-chloracetanilid
2,3,6-Trimethyl-N-(pyrazol-1-yl-methyl)-2-chloracetanid
2,3-Dimethyl-N-isopropyl-2-chloracetanilid

2-(2-Methyl-4-chlorphenoxy-N-methoxy-acetamid
2-(α-Naphthoxy)-N,N-diäthylpropionamid
2,2-Diphenyl-N,N-dimethylacetamid
α-(3,4,5-Tribrompyrazol-1-yl)-N,N-dimethylpropionamid
N-(1,1-Dimethylpropinyl)-3,5-dichlorbenzamid
N-1-Naphthylphthalamidsäure
Propionsäure-3,4-dichloranilid
Cyclopropancarbonsäure-3,4-dichloranilid
Methacrylsäure-3,4-dichloranilid
2-Methylpentancarbonsäure-3,4-dichloranilid
N-2,4-Dimethyl-5-(trifluormethyl)-sulfonylamino-phenylacetamid
N-4-Methyl-5-(trifluormethyl)-sulfonylamino-phenylacetamid
2-Propionyl-amino-4-methyl-5-chlor-thiazol
O-(Methylsulfonyl)-glykolsäure-N-äthoxymethyl-2,6-dimethylanilid
O-(Methylaminosulfonyl)-glykolsäure-N-isopropyl-anilid
O-(i-Propylaminosulfonyl)-glykolsäure-N-butin-1-yl-3-anilid
O-(Methylaminosulfonyl)-glykolsäure-hexamethylenamid
2,6-Dichlor-thiobenzamid
2,6-Dichlorbenzonitril
3,5-Dibrom-4-hydroxy-benzonitril (Salze)
3,5-Dijod-4-hydroxy-benzonitril (Salze)
3,5-Dibrom-4-hydroxy-O-2,4-dinitrophenylbenzaldoxim (Salze)
3,5-Dibrom-4-hydroxy-O-2-cyan-4-nitrophenylbenzaldoxim (Salze)
Pentachlorphenol-Natriumsalz
2,4-Dichlorphenyl-4'-nitrophenyläther
2,4,6-Trichlorphenyl-4'-nitrophenyläther
2-Fluor-4,6-dichlorphenyl-4'-nitrophenyläther
2-Chlor-4-trifluormethylphenyl-4'-nitrophenyläther
2,4'-Dinitro-4-trifluormethyl-diphenyläther
2,4-Dichlorphenyl-3'-methoxy-4'-nitro-phenyläther
2-Chlor-4-trifluormethylphenyl-3'-äthoxy-4'-nitro-phenyläther
2-Chlor-4-trifluormethylphenyl-3'-carboxy-4'-nitro-phenyläther (Salze)
2,4-Dichlorphenyl-3'-methoxycarbonyl-4'-nitro-phenyläther
2-(3,4-Dichlorphenyl)-4-methyl-1,2,4-oxadiazolidin-3,5-dion
2-(3-tert. Butylcarbamoyl-oxyphenyl)-4-methyl-1,2,4-oxadiazolidin-3,5-dion
2-(3-Isopropylcarbamoyl-oxyphenyl)-4-methyl-1,2,4-oxadiazolidin-3,5-dion
2-Phenyl-3,1-benzoxazinon-(4)
(4-Bromphenyl)-3,4,5,9,10-pentaazatetracyclo-[5,4,1,$0^{2,6}$,$0,^{8,11}$]-dodeca-3,9-dien
2-Äthoxy-2,3-dihydro-3,3-dimethyl-5-benzofuranyl-methansulfonat
2-Äthoxy-2,3-dihydro-3,3-dimethyl-5-benzofuranyl-dimethylaminosulfonat
2-Äthoxy-2,3-dihydro-3,3-dimethyl-5-benzofuranyl-(N-methyl-N-acetyl)-aminosulfonat
3,4-Dichlor-1,2-benzisothiazol
N-4-Chlorphenyl-allylbernsteinsäureimid
2-Methyl-4,6-dinitrophenol (Salze, Ester)
2-sec. Butyl-4,6-dinitrophenol (Salze, Ester)
2-sec. Butyl-4,6-dinitrophenol-acetat
2-tert. Butyl-4,6-dinitrophenol-acetat
2-tert. Butyl-4,6-dinitrophenol (Salze)
2-tert. Butyl-5-methyl-4,6-dinitrophenol (Salze)
2-tert. Butyl-5-methyl-4,6-dinitrophenol-acetat

2-sec. Amyl-4,6-dinitrophenol (Salze, Ester)

1-(α,α-Dimethylbenzyl)-3-(4-methylphenyl)-harnstoff
1-Phenyl-3-(2-methylcyclohexyl)-harnstoff
1-Phenyl-1-benzoyl-3,3-dimethyl-harnstoff
1-(4-chlorphenyl)-1-benzoyl-3,3-dimethyl-harnstoff
1-(4-chlorphenyl)-3,3-dimethyl-harnstoff
1-(4-Chlorphenyl)-3-methyl-3-butin-1-yl-3-harnstoff
1-(3,4-Dichlorphenyl)-3,3-dimethyl-harnstoff
1-(3,4-Dichlorphenyl)-1-benzoyl-3,3-dimethyl-harnstoff
1-(3,4-Dichlorphenyl)-3-methyl-3-n. butyl-harnstoff
1-(4-i-Propylphenyl)-3,3-dimethyl-harnstoff
1-(3-Trifluormethylphenyl)-3,3-dimethyl-harnstoff
1-(α,α,β,β-Tetrafluoräthoxyphenyl)-3,3-dimethyl-harnstoff

1-(3-tert. Butylcarbamoyloxy-phenyl)-3,3-dimethyl-harnstoff
1-(3-Chlor-4-methylphenyl)-3,3-dimethyl-harnstoff
1-(3-Chlor-4-methoxyphenyl)-3,3-dimethyl-harnstoff
1-(3,5-Dichlor-4-methoxyphenyl)-3,3-dimethyl-harnstoff
1-[4(4'-Chlorphenoxy)-phenyl]-3,3-dimethyl-harnstoff
1-[4(4'-methoxyphenoxy)-phenyl]-3,3-dimethyl-harnstoff
1-Cyclooctyl-3,3-dimethyl-harnstoff
1-(Hexahydro-4,7-methanindan-4-yl)-3,3-dimethyl-harnstoff
1-[1- oder 2-(3a,4,5,7,7a-Hexahydro)-4,7-methanoindanyl]-3,3-dimethyl-harnstoff
1-(4-Fluorphenyl)-3-carboxymethoxy-3-methyl-harnstoff
1-Phenyl-3-methyl-3-methoxy-harnstoff
1-(4-Chlorphenyl)-3-methyl-3-methoxy-harnstoff
1-(4-Bromphenyl)-3-methyl-3-methoxy-harnstoff
1-(3,4-Dichlorphenyl)-3-methyl-3-methoxy-harnstoff
1-(3-Chlor-4-bromphenyl)-3-methyl-methoxy-harnstoff
1-(3-Chlor-4-isopropylphenyl)-3-methyl-3-methoxy-harnstoff
1-(3-Chlor-4-methoxyphenyl)-3-methyl-3-methoxy-harnstoff
1-(3-tert. Butylphenyl)-3-methyl-3-methoxy-harnstoff
1-(2-Benzthiazolyl)-1,3-dimethyl-harnstoff
1-(2-Benzthiazolyl)-3-methyl-harnstoff
1-(5-Trifluormethyl-1,3,4-thiadiazolyl)-1,3-dimethyl-harnstoff
Imidazolidin-2-on-1-carbonsäure-isobutylamid
1,2-Dimethyl-3,5-diphenylpyrazolium-methylsulfat
1,2,4-Trimethyl-3,5-diphenylpyrazolium-methylsulfat
1,2-Dimethyl-4-brom-3,5-diphenylpyrazolium-methylsulfat
1,3-Dimethyl-4-(3,4-dichlorbenzoyl)-5-(4-methylphenylsulfonyloxy)-pyrazol
2,3,5-Trichlor-pyridinol-(4)
1-Methyl-3-phenyl-5-(3'-trifluormethylphenyl)-pyridon-(4)
1-Methyl-4-phenyl-pyridiniumchlorid
1,1-Dimethylpyridiniumchlorid
3-Phenyl-4-hydroxy-6-chlorpyridazin
1,1'-Dimethyl-4,4'-dipyridylium-di(methylsulfat)
1,1'-Di(3,5-dimethylmorpholin-carbonylmethyl)-4,4'-dipyridylium-dichlorid
1,1'-Äthylen-2,2'-dipyridylium-dibromid
3-[1-(N-Äthoxyamino)-propyliden]-6-äthyl-3,4-dihydro-2H-pyran-2,4-dion
3-[1-(N-Allyloxyamino)-propyliden]-6-äthyl-3,4-dihydro-2H-pyran-2,4-dion
2-[1-(N-Allyloxyamino)-propyliden]-5,5-dimethylcyclohexan-1,3-dion (Salze)
2-[1-(N-Allyloxyamino-butyliden]-5,5-dimethylcyclohexan-1,3-dion (Salze)
2-[1-(N-Allyloxyamino-butyliden]-5,5-dimethyl-4-methoxycarbonyl-cyclohexan-1,3-dion (Salze)
2-Chlorphenoxyessigsäure (Salze, Ester, Amide)
4-Chlorphenoxyessigsäure (Salze, Ester, Amide)
2,4-Dichlorphenoxyessigsäure (Salze, Ester, Amide)
2,4,5-Trichlorphenoxyessigsäure (Salze, Ester, Amide)
2-Methyl-4-chlorphenoxyessigsäure (Salze, Ester, Amide)
3,5,6-Trichlor-2-pyridinyl-oxyessigsäure (Salze, Ester, Amide)

α-Naphthoxyessigsäuremethylester
2-(2-Methylphenoxy)-propionsäure (Salze, Ester, Amide)
2-(4-Chlorphenoxy)-propionsäure (Salze, Ester, Amide)
2-(2,4-Dichlorphenoxy)-propionsäure (Salze, Ester, Amide)
2-(2,4,5-Trichlorphenoxy)-propionsäure (Salze, Ester, Amide)
2-(2-Methyl-4-chlorphenoxy)-propionsäure (Salze, Ester, Amide)

4-(2,4-Dichlorphenoxy)-buttersäure (Salze, Ester, Amide)
4-(2-Methyl-4-chlorphenoxy)-buttersäure (Salze, Ester, Amide)
Cyclohexyl-3-(2,4-dichlorphenoxy)-acrylat
9-Hydroxyfluoren-carbonsäure-(9) (Salze, Ester)
2,3,6-Trichlorphenyl-essigsäure (Salze, Ester)
4-Chlor-2-oxo-benzothiazolin-3-yl-essigsäure (Salze, Ester)
Gibellerinsäure (Salze)
Dinatrium-methylarsonat
Mononatriumsalz der Methylarsonsäure
N-Phosphon-methyl-glycin (Salze)
N,N-Bis-(phosphonmethyl)-glycin (Salze)
2-Chloräthanphosphonsäure-2-chloräthylester
Ammonium-äthyl-carbamoyl-phosphonat
Di-n-butyl-1-n-butylamino-cyclohexyl-phosphonat
Trithiobutylphosphit
O,O-Diisopropyl-5-(2-benzosulfonylamino-äthyl)-phosphordithioat
2,3-Dihydro-5,6-dimethyl-1,4-dithiin-1,1,4,4-tetraoxid
5-tert. Butyl-3-(2,4-dichlor-5-isopropoxyphenyl)-1,3,4-oxadiazolon-(2)
4,5-Dichlor-2-trifluormethyl-benzimidazol (Salze)
1,2,3,6-Tetrahydropyridazin-3,6-dion (Salze)
Bernsteinsäure-mono-N-dimethylhydrazid (Salze)
(2-Chloräthyl)-trimethyl-ammoniumchlorid
(2-Methyl-4-phenylsulfonyl)-trifluormethansulfonanilid
1,1-Dimethyl-4,6-diisopropyl-5-indanyläthylketon
Natriumchlorat
Ammoniumrhodanid
Calciumcyanamid

Außerdem ist es nützlich, die erfindungsgemäßen Mischungen auch noch mit weiteren Pflanzenschutzmitteln gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralstofflösungen, welche zur Behebung von Ernährungs- oder Spurenelementmängeln eingesetzt werden. Zur Aktivierung der herbiziden Wirkung können Netz- und Haftmittel sowie nicht phytotoxische Öle und Ölkonzentrate zugesetzt werden.

Durch die folgenden Gewächshaus- und Freilandversuche wird die durch die kombinierte Anwendung von N-Azolyl-methyl-acetaniliden der Formel I und Cyclohexan-1,3-dionderivaten der Formel II in den erfindungsgemäßen herbiziden Mitteln erzielte synergistische Wirkungsteigerung belegt.

Als Kulturgefäße dienten Plastikblumentöpfe mit 300 $cm^3$ Inhalt und lehmigem Sand mit etwa 1,5 % Humus als Substrat. Die Samen der Testpflanzen entsprechend Tabelle 1 wurden nach Arten getrennt flach eingesät. Unmittelbar danach erfolgte bei Vorauflaufbehandlung das Aufbringen der Wirkstoffe auf die Erdoberfläche. Die Einzelwirkstoffe und die Mischungen davon wurden hierbei in Wasser als Verteilungsmittel suspendiert oder emulgiert und mittels fein verteilender Düsen gespritzt. Nach dem Aufbringen der Mittel wurden die Gefäße leicht beregnet, um Keimung und Wachstum in Gang zu bringen und auch gleichzeitig die chemischen Wirkstoffe zu aktivieren. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern dies nicht durch die chemischen Wirkstoffe beeinträchtigt wurde. Die Aufstellung der Versuche erfolgte im Gewächshaus, wobei für wärmeliebende Arten heißere Bereiche von 25 bis 40 °C und für solche gemäßigter Klimate 15 bis 30 °C bevorzugt wurden. Die Versuchsperiode erstreckte sich über 4 bis 6 Wochen. Während dieser Zeit wurden die Pflanzen gepflegt und ihre Reaktion auf die einzelnen Behandlungen wurde ausgewertet.

Bei den Freilandversuchen wurden die Mittel in Wasser als Träger- und Verteilermedium emulgiert oder suspensiert, mit Hilfe einer motorgetriebenen, auf einen Traktor montierten Parzellenspritze auf Kleinparzellen mit lehmigem Sand und Lehm mit pH 5-6 und 1 bis 1,5 % Humusgehalt ausgebracht. Als Kultur wurden Zuckerrüben ausgewählt. Diese wurden zunächst, anstelle einer mechanischen Unkrautbekämpfung mit 2,0 bis 2,5 kg des Herbizids 1-Phenyl-4-amino-5-chlor-pyridazon-(6)/ha nach der Saat und vor dem Auflaufen von Kulturpflanzen und unerwünschten Pflanzen behandelt, um breitblättrige Unkräuter zu bekämpfen. Acht Wochen danach erfolgte die Zweitspritzung mit den erfindungsgemäßen Mitteln im Nachauflaufverfahren, die vorwiegend zur Bekämpfung unerwünschter Gräser dient. Bei diesen reichten die Entwicklungsstadien von noch ungekeimten Samen im Boden bis zu bestockten (tillered), von Chloridazon nicht erfaßten Pflanzen. Bei Mangel an natürlichen Niederschlägen wurde zunächst beregnet, um ein normales Wachstum von Kulturpflanzen und unerwünschten Pflanzen zu gewährleisten. Die Versuche liefen über mehrere Monate.

Die folgenden Tabellen enthalten die Prüfsubstanzen, die jeweiligen Dosierungen in kg/ha Aktivsubstanz und die Testpflanzenarten. Bewertet wurde nach einer Skala von 0 bis 100. Dabei bedeutet 0 keine Schädigung oder normaler Ablauf und 100 kein Aufgang der Pflanzen bzw. völlige Zerstörung zumindest

der oberirdischen Sproßteile.

Folgende Wirkstoffe wurden verwendet:

2-Chlor-2',6'-dimethyl-N-(pyrazol-1-yl-methyl)-acetanilid (Wirkstoff A),
2-(1-Äthoxyaminobutyliden)-5-(2-äthylthiopropyl)-cyclohexan-1,3-dion und sein Na-Salz (Wirkstoff B).

Zur rechnerischen Prüfung der Mischungen auf synergistische Wirkung wurde zunächst die Wirkung der Einzelverbindungen in abgestuften Aufwandmengen festgestellt (Dosis-Wirkungsreihen). Daraus wurden nach der von F.H.A. Rummens in Weed Science *23*, 4 ff (1975) vorgeschlagenen Methode die theoretisch zu erwartende Wirkung, welche sich aus der Mischung zweier Partner mit vorgegebener Einzelwirkung ergeben könnte, errechnet. Diese errechneten Werte wurden mit den tatsächlich, in den Versuchen festgestellten Ergebnissen der Mischungen verglichen. Sind die gefundenen Schädigungsgrade größer als die berechneten, so liegt eine synergistische Wirkung vor.

Ergebnis

Die Werte in Tabelle 2 zeigen, daß die tatsächlich gefundenen Schädigungsgrade der beispielhaften grasartigen Pflanzen über den theoretisch zu erwartenden liegen. Somit zeigt sich eine synergistische Wirkung dieser Wirkstoffkombinationen, die über eine rein additive Wirkung der Einzelwirkstoffe hinausgeht.

Tabelle 1

Liste der Pflanzennamen

| Botanische Bezeichnung | Abkürzung in Tabelle | Deutsche Bezeichnung | Englische Bezeichnung |
|---|---|---|---|
| Alopecurus myosuroides | Alopec. myosur. | Ackerfuchsschwanz | slender foxtail |
| Beta vulgaris | — | Zuckerrübe | sugarbeets |
| Brachiaria platyphylla | Brachiaria plat. | — | broadleaf signal gras |
| Echinochloa crus-galli | Echinochl. c.g. | Hühnerhirse | barnyardgrass |
| Hordeum vulgare | Hord. vulgare | Gerste | barley |
| Rottboellia exaltata | Rottboellia ex. | — | itchgrass |

Tabelle 2

Synergistische herbizide Wirkung von Mischungen aus Wirkstoff A und B bei Vorauflaufanwendung im Gewächshaus

| | | Testpflanzen sowie theoretische und tatsächliche Schädigung | | | | | | | |
|---|---|---|---|---|---|---|---|---|---|
| | | Alopec. myosur. Schädigung [%] | | Brachiaria plat. Schädigung [%] | | Rottboellia ex. Schädigung [%] | | Hord. vulgare Schädigung [%] | |
| Wirkstoffe | Aufwandmenge [kg a.S./ha] | err.+ | fest-gest.++ | err.+ | fest-gest.++ | err.+ | fest-gest.++ | err.+ | fest-gest.++ |
| A + B | 0,06 + 0,06 | 83 | 98 | 76 | 92 | 24 | 58 | 72 | 95 |
| | 0,125 + 0,125 | 89 | 100 | 89 | 98 | 33 | 68 | 95 | 99 |
| | 0,25 + 0,25 | 93 | 100 | 95 | 98 | 41 | 72 | 99 | 99 |
| | 0,125 + 0,03 | 86 | 98 | 75 | 82 | 20 | 45 | 89 | 97 |
| | 0,06 + 0,25 | 92 | 98 | 87 | 95 | 28 | 50 | 97 | 97 |

\+ theoretisch errechnet
++ festgestellt

(Siehe die Tabelle 3, Seite 14)

Tabelle 3

Bekämpfung von unerwünschten Gräsern in Zuckerrüben durch synergistische Wirkung von Mischungen aus den Wirkstoffen A und B bei Nachauflaufanwendung im Freiland

| Wirkstoffe | Aufwandmenge [kg a.S./ha] | Testpflanzen und Schädigung [%] Beta vulgaris | Alopec. myosur. | Echinochl. |
|---|---|---|---|---|
| A | 0,5 | 0 | 22 | 45 |
| | 1,0 | 0 | 48 | 52 |
| | 2,0 | 2 | 66 | 72 |
| B | 0,5 | 0 | 71 | 87 |
| | 1,0 | 3 | 84 | 82 |
| A + B | 1,0 + 0,25 | 0 | 89 | 95 |
| | 1,0 + 0,5 | 0 | 95 | 100 |

0 = keine Schädigung
100 = Pflanzen abgestorben

**Ansprüche**

1. Herbizides Mittel, enthaltend eine Mischung aus einem N-Azolylmethyl-halogenacetanilid der Formel I

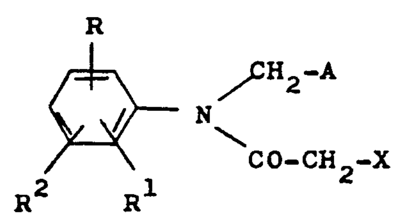

(I)

in der

R Wasserstoff, einen unverzweigten oder verzweigten Alkyl- oder Alkoxyrest mit bis zu 5 Kohlenstoffatomen,

$R^1$ und $R^2$ gleich oder verschieden sind und Wasserstoff, Halogen, einen unverzweigten oder verzweigten Alkyl- oder Alkoxyrest mit bis zu 5 Kohlenstoffatomen,

R zusammen mit $R^2$ eine orthoständig verknüfte, gegebenenfalls durch unverzweigte Alkylgruppen mit bis zu 4 Kohlenstoffatomen substituierte Alkylenkette mit bis zu 6 Kohlenstoffatomen,

X Chlor oder Brom und

A einen über ein Ringstickstoffatom gebundenen Pyrrol-, Pyrazol-, Imidazol-, Triazol- oder Tetrazolring, der einfach oder mehrfach durch Halogen, Phenyl, Alkyl-, Alkoxy-, Alkylthio- oder Perfluoralkylreste mit jeweils bis zu 4 Kohlenstoffatomen, Cyan, Carboxy, Carbalkoxy mit bis zu 4 Kohlenstoffatomen in der Alkoxygruppe oder Alkanoylreste mit bis zu 4 Kohlenstoffatomen substituiert sein kann, bedeutet, wobei A auch für Salze der genannten 2 oder 3 Stickstoffatome enthaltenden, gegebenenfalls wie angegeben substituierten Azolringe stehen kann, und einem substituierten Cyclohexan-1,3-dionderivat der Formel II

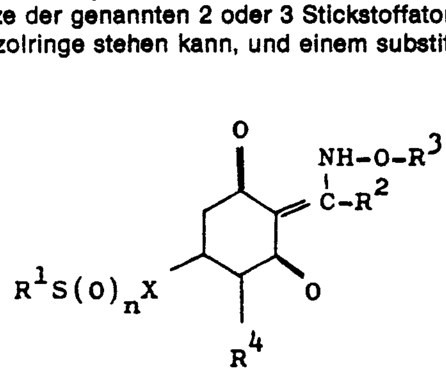

(II)

in der

$R^1$ eine Alkylgruppe mit bis zu 4 Kohlenstoffatomen, Phenyl, eine durch Halogen, Alkyl oder Alkoxy mit bis zu 4 Kohlenstoffatomen substituierte Phenyl- oder Benzylgruppe,

$R^2$ eine Alkylgruppe mit bis zu 4 Kohlenstoffatomen,

$R^3$ eine Alkyl- oder Alkenylgruppe mit bis zu 4 Kohlenstoffatomen,

$R^4$ Wasserstoff oder eine Alkoxycarbonylgruppe mit bis zu 5 Kohlenstoffatomen,

X eine unverzweigte oder verzweigte Alkylengruppe mit bis zu 4 Kohlenstoffatomen und

n 0, 1 oder 2 bedeuten, oder einem Metallsalz oder Ammoniumsalz dieses Cyclohexan-1,3-dionderivats, wobei das Mischungsverhältnis N-Azolylmethyl-halogenacetanilid der Formel I : Cyclohexan-1,3-dionderivat der Formel II 1 : 0,125 bis 1 : 10 Gewichtsteile beträgt.

2. Herbizides Mittel nach Anspruch 1, dadurch gekennzeichnet, daß es als N-Azolylmethylhalogenacetanilid der Formel I 2-Chlor-2',6'-dimethyl-N-(pyrazol-1-yl-methyl)-acetanilid enthält.

3. Herbizides Mittel nach Anspruch 1, dadurch gekennzeichnet, daß es als Cyclohexan-1,3-dionderivat der Formel II 2-(1-Äthoxyaminobutyliden)-5-(2-äthyl-thiopropyl)-cyclohexan-1,3-dion enthält.

4. Herbizides Mittel nach Anspruch 1, 2 oder 3, dadurch gekennzeichnet, daß es 2-Chlor-2',6'-dimethyl-N-(pyrazol-1-yl-methyl)-acetanilid und 2-(1-Äthoxyaminobutyliden)-5-(2-äthyl-thiopropyl)-cyclohexan-1,3-dion im Gewichtsverhältnis 1 : 0,125 bis 1 : 10 enthält.

5. Verfahren zur Bekämpfung unerwünschten Pflanzenwuchses, dadurch gekennzeichnet, daß man die Pflanzen oder den Boden mit einer herbizid wirksamen Menge eines herbiziden Mittels gemäß Anspruch 1 behandelt.

**Claims**

1. A herbicidal agent containing a mixture of an N-azolylmethylhaloacetanilide of the formula I

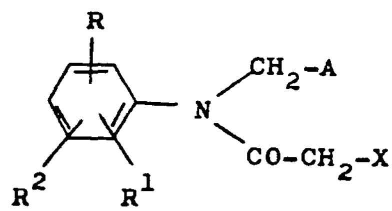

(I)

where

R denotes hydrogen, linear or branched alkyl or alkoxy of up to 5 carbon atoms,

$R^1$ and $R^2$ are identical or different and each denotes hydrogen, halogen, or linear or branched alkyl or alkoxy of up to 5 carbon atoms,

R and $R^2$ together denote an ortho-position alkylene chain of up to 6 carbon atoms which is unsubstituted or substituted by linear alkyl of up to 4 carbon atoms,

X denotes chlorine or bromine, and

A denotes a pyrrole, pyrazole, imidazole, triazole or tetrazole ring attached via a ring nitrogen atom and which is unsubstituted or mono- or polysubstituted by halogen, phenyl, alkyl, alkoxy, alkylthio or perfluoroalkyl, each of up to 4 carbon atoms, cyano, carboxy, carbalkoxy, where alkoxy is of up to 4 carbon atoms, or alkanoyl of up to 4 carbon atoms, or A denotes a salt of one of the said azole rings containing 2 or 3 nitrogen atoms and optionally bearing the said substituents, and a substituted cyclohexane-1,3-dione derivative of the formula II

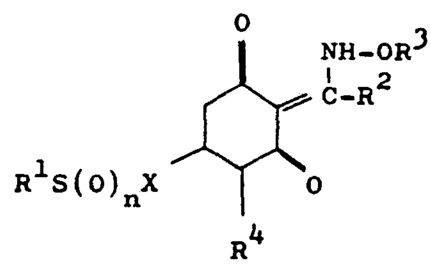

(II)

where

$R^1$ denotes alkyl of up to 4 carbon atoms, phenyl, or phenyl or benzyl substituted by halogen, alkyl or alkoxy of up to 4 carbon atoms,

$R^2$ denotes alkyl of up to 4 carbon atoms,

$R^3$ denotes alkyl or alkenyl of up to 4 carbon atoms,

$R^4$ denotes hydrogen or alkoxycarbonyl of up to 5 carbon atoms,

X denotes linear or branched alkylene of up to 4 carbon atoms, and

n denotes 0, 1 or 2, or a metal salt or ammonium salt of such a cyclohexane-1,3-dione derivative, the ratio of N-azolylmethylhaloacetanilide of the formula I to cyclohexane-1,3-dione of the formula II being from 1 : 0.125 to 1 : 10 parts by weight.

2. A herbicidal agent as claimed in claim 1, characterized in that it contains 2-chloro-2',6'-dimethyl-N-(pyrazol-1-yl-methyl)-acetanilide as the N-azolylmethylhaloacetanilide of the formula I.

3. A herbicidal agent as claimed in claim 1, characterized in that it contains 2-(1-ethoxyaminobutylidene)-5-(2-ethylthiopropyl)-cyclohexane-1,3-dione as the cyclohexane-1,3-dione derivative of the formula II.

4. A herbicidal agent as claimed in claim 1, 2 or 3, characterized in that it contains 2-chloro-2',6'-dimethyl-N-(pyrazol-1-yl-methyl)-acetanilide and 2-(1-ethoxyaminobutylidene)-5-(2-ethylthiopropyl)-cyclohexane-1,3-dione in a weight ratio of from 1 : 0.125 to 1 : 10.

5. A process for combating unwanted plant growth, characterized in that the plants or the soil are treated with a herbicidally effective amount of a herbicidal agent as claimed in claim 1.

**Revendications**

1. Agent herbicide, contenant un mélange d'un N-azolylméthyl-halogénacétanilide de formule I

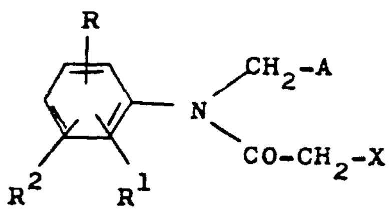

(I)

dans laquelle

R représente hydrogène, un reste alkyle ou alcoxy, ramifié ou non et ayant jusqu'à 5 atomes de carbone,

$R^1$ et $R^2$ sont identiques ou différents et représentent hydrogène, halogène, un reste alkyle ou alcoxy, ramifié ou non, ayant jusqu'à 5 atomes de carbone,

R avec $R^2$ représentent une chaîne ayant jusqu'à 6 atomes de carbone, liée en position ortho, éventuellement substituée par des groupes alkyle non ramifiés, ayant jusqu'à 4 atomes de carbone,

X représente chlore ou brome, et

A représente un noyau pyrrole, pyrazole, imidazole, triazole ou tétrazole, lié par l'intermédiaire d'un atome d'azote du noyau, et qui peut être substitué une ou plusieurs fois par halogène, phényle, un reste alkyle, alcoxy, alkylthio ou perfluoralkyle, ayant chaque fois jusqu'à 4 atomes de carbone, cyano, carboxy, carbalcoxy ayant jusqu'à 4 atomes de carbone dans le groupe alcoxy ou un reste alcanoyle ayant jusqu'à 4 atomes de carbone, A pouvant représenter aussi un sel du noyau azole indiqué, contenant 2 ou 3 atomes d'azote, éventuellement substitué comme indiqué, et d'un dérivé de cyclohexane-1,3-dione substitué de formule II

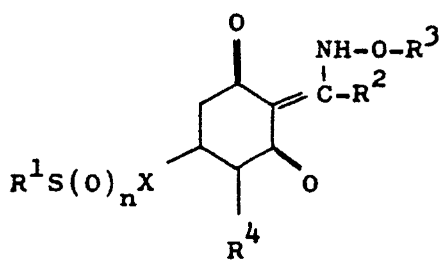

(II)

dans laquelle

$R^1$ représente un groupe alkyle ayant jusqu'à 4 atomes de carbone, phényle, un groupe phényle ou benzyle substitué par halogène, alkyle ou alcoxy ayant jusqu'à 4 atomes de carbone,

$R^2$ un groupe alkyle ayant jusqu'à 4 atomes de carbone,

$R^3$ un groupe alkyle ou alcényle ayant jusqu'à 4 atomes de carbone,

$R^4$ l'hydrogène ou un groupe alcoxycarbonyle ayant jusqu'à 5 atomes de carbone,

X un groupe alkylène ramifié ou non, ayant jusqu'à 4 atomes de carbone, et

n représente 0, 1 ou 2, ou d'un sel de métal ou d'ammonium de ce dérivé de cyclohexane-1,3-dione, le rapport de mélange, N-azolylméthylhalogénacétanilide de formule I/dérivé de cyclohexane-1,3-dione de formule II étant de 1/0,125 à 1/10.

2. Agent herbicide selon la revendication 1, caractérisé par le fait qu'il contient, comme N-azolylméthylhalogénacétanilide de formule I, ou 2-chloro-2',6'-diméthyl-N-(pyrazol-1-yl-méthyl)-acétanilide.

3. Agent herbicide selon la revendication 1, caractérisé par le fait qu'il contient comme dérivé de cyclohexan-1,3-dione de formule II, la 2-(1-éthoxyaminobutylidèn)-5-(2-éthyl-thiopropyl)-cyclohexane-1,3-dione.

4. Agent herbicide selon l'une des revendications 1, 2 ou 3, caractérisé par le fait qu'il contient du 2-chloro-2',6'-diméthyl-N-(pyrazol-1-yl-méthyl)-acétanilide et du 2-(1-éthoxyaminobutylidèn-5-(2-éthylthiopropyl)-cyclohexane-1,3-dione dans un rapport en poids de 1/0,125 à 1/10.

5. Procédé de lutte contre la croissance indésirable de plantes, caractérisé par le fait qu'on traite les plantes ou le sol avec une quantité efficace, du point de vue herbicide, d'un agent herbicide selon la revendication.